# EUROPÄISCHE PATENTSCHRIFT

(11) **EP 4 532 287 B1**
(45) Veröffentlichungstag und Bekanntmachung des Hinweises auf die Patenterteilung: **18.03.2026**
(21) Anmeldenummer: 23726926.1
(22) Anmeldetag: 11.05.2023
(51) Int. Cl.: B60W 50/14, B60W 50/08

(54) **VERFAHREN ZUM UNTERSTÜTZEN EINES FAHRERS BEIM NUTZEN EINER FAHRERASSISTENZFUNKTION IN EINEM KRAFTFAHRZEUG SOWIE KRAFTFAHRZEUG**
METHOD FOR SUPPORTING A DRIVER WHEN USING A DRIVER ASSISTANCE FUNCTION IN A MOTOR VEHICLE, AND MOTOR VEHICLE
PROCÉDÉ POUR AIDER UN CONDUCTEUR LORS DE L'UTILISATION D'UNE FONCTION D'AIDE À LA CONDUITE DANS UN VÉHICULE À MOTEUR, ET VÉHICULE À MOTEUR

(30) Priorität: 24.05.2022 DE 102022205146
(43) Veröffentlichungstag der Anmeldung: 09.04.2025
(73) Patentinhaber: VOLKSWAGEN AKTIENGESELLSCHAFT, 38440 Wolfsburg (DE)
(72) Erfinder: MÜNNING, Daniel, 38124 Braunschweig (DE); ACKERT, Lukas, 38373 Frellstedt (DE)
(86) Internationale Anmeldenummer: PCT/EP2023/062531
(87) Internationale Veröffentlichungsnummer: WO 2023/227377

(56) Entgegenhaltungen:
- DE-A1- 102010 009 132
- DE-A1- 102019 102 924
- US-A1- 2020 139 979
- US-A1- 2020 356 100

## Beschreibung

Die vorliegende Erfindung betrifft zwei Verfahren zum Unterstützen eines Fahrers beim Nutzen einer Fahrerassistenzfunktion in einem Kraftfahrzeug sowie ein Kraftfahrzeug.

Aktuelle Entwicklungen zeigen, dass viele neue Geschäftsfelder sich um das Thema Carsharing und dem damit verbundenen Ansatz einer Erhöhung einer Nutzungsdauer pro Fahrzeug pro Tag befassen. Zukünftig wird erwartet, dass Kunden weniger eigene Fahrzeuge besitzen und stattdessen einzelne Fahrzeuge durch Vermieter bereitgestellt werden, welche bereits jetzt an vielen intermodalen Übergabestationen beheimatet sind wie Flughäfen oder Bahnhöfen. Es wird also vermehrt zu Situationen kommen, in welchen ein Kunde erstmalig in einem Fahrzeug sitzt, um eine bestimmte Strecke zurückzulegen. Da Kunden in diesem Usecase keine Einweisung durch einen Fahrzeugverkäufer bekommen und nicht ein gesamtes Bordbuch vor Fahrtbeginn lesen werden und dementsprechend viele Funktionen beispielsweise gar nicht kennen, werden diese Funktionen häufig nicht beziehungsweise falsch angewendet. Verwendet ein Kunde beispielsweise erstmalig ein Fahrzeug mit einem querführenden Assistenzsystem, weiß dieser oft nicht, wie das querführende Assistenzsystem zu aktivieren ist, und vor allem in welchen Situationen sich ein deutlicher Komfortgewinn durch diese Assistenzfunktion generieren lässt.

Aus der DE 10 2010 009 132 A1 ist ein Verfahren zur Unterstützung eines Fahrers bei einem Führen eines ein Fahrerassistenzsystem aufweisenden Kraftfahrzeugs bekannt. Für eine Unterstützung des Fahrers zu einem bestmöglichen Einsatz des Fahrerassistenzsystems wird bei einer Inbetriebnahme des Kraftfahrzeugs ein Nutzeridentifikationsverfahren automatisch durchgeführt und der Fahrer erhält nach Durchführung des Nutzeridentifikationsverfahrens in Abhängigkeit von dem Ergebnis des Nutzeridentifikationsverfahrens automatisch einen Gebrauchshinweis zu dem Fahrerassistenzsystem. Der Fahrer erhält zumindest eine Information über das Vorhandensein des Fahrerassistenzsystems, sodass ihm damit die Möglichkeit zu dessen Nutzung gegeben wird. Der Fahrer kann eine auf die augenblickliche Fahrt des Kraftfahrzeugs zugeschnittene Information erhalten.

Weiterhin ist aus der DE 10 2012 008 260 A1 ein Verfahren zum interaktiven Erlernen eines in einem Fahrzeug vorhandenen Fahrerassistenzsystems im Fahrbetrieb bekannt. Bei dem Verfahren kann der Fahrer eine Tutorfunktion auswählen und aktivieren, wodurch dem Fahrer infolgedessen ein Tutorial angeboten wird.

Darüber hinaus ist aus der DE 10 2013 019 563 A1 ein Verfahren zum Bereitstellen von Informationen über eine Umgebung an einem Smartgerät bekannt.

Weiterhin offenbart die DE 10 2019 102 924 A1 ein Verfahren zum Betreiben einer Fahrerassistenzfunktion eines Fahrzeuges.

Es ist die Aufgabe der Erfindung, eine Lösung zu schaffen, welche ein besonders gutes situationsbedingtes Empfehlen einer Fahrerassistenzfunktion in einem Kraftfahrzeug für einen Fahrer ermöglicht.

Diese Aufgabe wird durch die Gegenstände der unabhängigen Ansprüche gelöst. Weitere mögliche Ausgestaltungen der Erfindung sind in den Unteransprüchen, der Beschreibung und den Figuren offenbart.

Die Erfindung betrifft ein erstes Verfahren zum Unterstützen eines Fahrers beim Nutzen einer Fahrerassistenzfunktion in einem Kraftfahrzeug. Bei dem Verfahren ist es vorgesehen, dass eine ermittelte Fahrtroute des Kraftfahrzeugs in mehrere Segmente unterteilt wird. Hierbei kann die Fahrtroute beispielsweise mittels einer Navigationseinrichtung des Kraftfahrzeugs ermittelt werden. Basierend auf einer aktivierten Routenführung kann die Fahrtroute von der Navigationseinrichtung ermittelt und für das Verfahren bereitgestellt werden. Das Kraftfahrzeug kann eine elektronische Recheneinrichtung umfassen, welche dazu eingerichtet ist, die ermittelte Fahrtroute von einer Navigationseinrichtung zu empfangen und in die Segmente zu unterteilen. Bei dem Verfahren wird jedem Segment eine Priorität zugeteilt, welche charakterisiert, wie vorteilhaft ein Einsatz der Fahrerassistenzfunktion in dem jeweiligen Segment ist. Diese Zuteilung der Prioritäten zu den jeweiligen Segmenten kann mittels der elektronischen Recheneinrichtung erfolgen. Die elektronische Recheneinrichtung kann somit ermitteln, wie gut der Einsatz der Fahrerassistenzfunktion in den jeweiligen Segmenten geeignet ist und anschließend in Abhängigkeit von dieser Bewertung jedem der Segmente eine Priorität zuordnen.

Bei dem Verfahren ist es weiterhin vorgesehen, dass eine Reihenfolge der Segmente in Abhängigkeit von ihrer Priorität und in Abhängigkeit von ihrem Auftreten entlang der Fahrtroute erstellt wird. Hierbei kann die Reihenfolge mittels der elektronischen Recheneinrichtung erstellt werden. Die elektronische Recheneinrichtung kann somit dazu eingerichtet sein, ein Optimierungsverfahren durchzuführen, bei welchem die Segmente in Abhängigkeit von der ihnen jeweils zugeordneten Priorität sowie deren Auftreten entlang der Fahrtroute sortiert werden. Unter der Reihenfolge ist eine virtuelle Aneinanderreihung der Segmente zu verstehen, welche nicht zwangsläufig der örtlichen Reihenfolge der Segmente entspricht. Je höher eine Priorität eines jeweiligen Segmentes sowie je früher dessen Auftreten entlang der Fahrtroute ist, desto weiter vorne in der Reihung wird das Segment angeordnet. Je niedriger die Priorität eines Segments ist, beziehungsweise je später das Segment entlang der Fahrtroute auftritt, desto weiter hinten wird das Segment in der Reihenfolge einsortiert. Bei dem Verfahren ist es weiterhin vorgesehen, dass der Fahrer mittels eines Hinweissignals auf die Fahrerassistenzfunktion hingewiesen wird, wenn das Kraftfahrzeug in dem ersten Segment der Reihenfolge fährt. Das bedeutet, dass dem Fahrer des Kraftfahrzeugs das Hinweissignal in einem möglichst früh entlang der Fahrtroute auftretenden Segment mit einer möglichst hohen zugewiesenen Priorität ausgegeben wird. Das Ausgeben des Hinweissignals kann beispielsweise mittels der elektronischen Recheneinrichtung ausgelöst werden. Für das Ausgeben des Hinweissignals kann das Kraftfahrzeug eine Ausgabeeinrichtung aufweisen, welche dazu eingerichtet ist, das Hinweissignal optisch und/oder akustisch auszugeben.

In einer möglichen Weiterbildung der Erfindung ist es vorgesehen, dass den Segmenten die Priorität in Abhängigkeit von einer Straßenklasse des jeweiligen Segments zugeordnet wird. Die Straßenklasse kann insbesondere charakterisieren, ob die Fahrtroute in dem Segment über eine Autobahn oder über eine Landstraße mit wenigen oder langen Kurven oder über eine Landstraße mit vielen engen Kurven oder über eine Stadtstraße verläuft. Hierbei kann somit Segmenten, in welchen die ermittelte Fahrtroute über eine Autobahn verläuft, die Priorität 1 zugeordnet werden, Segmenten, in welchen die ermittelte Fahrtroute über eine Landstraße mit wenigen beziehungsweise weiten Kurven läuft, die Priorität 2 zugeordnet werden, Segmenten, in welchen die ermittelte Fahrtroute über eine Landstraße mit vielen engen Kurven verläuft, die Priorität 3 zugeordnet werden und Segmenten, in welchen die Fahrtroute des Kraftfahrzeugs über eine Stadtstraße verläuft, die Priorität 4 zugeordnet werden. Würde beispielsweise anhand der optimierten Routenführung ermittelt werden, dass für das Kraftfahrzeug aktuell eine Fahrtroute von Berlin nach Hamburg vorgesehen ist, dann würde ein erster Fahrtabschnitt dieser Fahrtroute in Berlin über Stadtstraßen führen, ein zweiter Fahrtabschnitt über Landstraßen mit wenigen weiten Kurven führen, ein dritter Fahrtabschnitt über die Autobahn führen und ein vierter Fahrtabschnitt in Hamburg über Stadtstraßen führen. Somit würde Segmenten im ersten Fahrtabschnitt die Priorität 4 zugeordnet werden, Segmenten im zweiten Fahrtabschnitt die Priorität 2 zugeordnet werden, Segmenten im dritten Fahrtabschnitt die Priorität 1 zugeordnet werden und Segmenten im vierten Fahrtabschnitt die Priorität 4 zugeordnet werden. Hinsichtlich des Auftretens entlang der Fahrtroute würden die Segmente des ersten Fahrtabschnitts als erstes auftreten, die Segmente des zweiten Fahrtabschnitts als zweites auftreten, die Segmente des dritten Fahrtabschnitt als drittes auftreten und die Segmente des vierten Fahrtabschnitts als letztes auftreten. Da die Segmente des zweiten Fahrtabschnitts mit der Priorität 2 eine hohe Priorität aufweisen und gleichzeitig relativ früh entlang der ermittelten Fahrtroute auftreten, würde eines der Segmente des zweiten Fahrtabschnitts in der Reihenfolge ganz vorne angeordnet werden, sodass das Hinweissignal für die Fahrerassistenzfunktion im Kraftfahrzeug ausgegeben wird, sobald das Kraftfahrzeug in diesem Segment fährt. Der Fahrer würde somit, während das Kraftfahrzeug in diesem Segment des zweiten Fahrtabschnitts fährt, mittels des Hinweissignals auf die Fahrerassistenzfunktion aufmerksam gemacht werden können. Hierdurch könnte der Fahrer besonders früh auf seiner Fahrt entlang der ermittelten Fahrtroute auf das Fahrerassistenzsystem hingewiesen werden in einem Segment, welches aufgrund der hohen Priorität besonders gut für den Einsatz dieses Fahrerassistenzsystems geeignet ist. Hierdurch kann eine besonders hohe Akzeptanz des Fahrers für das Fahrerassistenzsystem geschaffen werden und eine Wahrscheinlichkeit dafür, dass der Fahrer das Fahrerassistenzsystem weiterhin bei seiner Fahrt entlang der Fahrtroute aktiviert, besonders hoch sein. Hierdurch kann eine besonders hohe Wahrscheinlichkeit für einen Einsatz des Fahrerassistenzsystems erreicht werden.

In einer weiteren möglichen Ausgestaltung der Erfindung ist es vorgesehen, dass die Segmente der Fahrtroute hinsichtlich einer vorgegebenen Streckenlänge oder hinsichtlich einer vorgegebenen geschätzten Fahrtdauer des Kraftfahrzeugs in dem jeweiligen Segment eingeteilt werden. Über die Streckenlänge beziehungsweise die Fahrtdauer kann somit eine Erstreckung beziehungsweise eine Länge der jeweiligen Segmente vorgegeben werden. Es können somit große Unterschiede zwischen jeweiligen Längen der Segmente vermieden werden. Hierdurch wird eine besonders gute Optimierung der Reihenfolge der Segmente in Abhängigkeit von ihrer jeweiligen Priorität sowie ihrem jeweiligen Auftreten entlang der Fahrtroute ermöglicht.

In einer weiteren möglichen Ausgestaltung der Erfindung ist es vorgesehen, dass die Segmente der Fahrtroute anhand jeweiliger Abbruchszenarien für die Fahrerassistenzfunktion und/oder anhand jeweiliger Straßenklassen von bei der Fahrtroute genutzten Straßen eingeteilt werden. Das Abbruchszenario kann beispielsweise durch das Vorhandensein einer Ampel und/oder einer Kreuzung und/oder eines Kreisverkehrs und/oder einer engen Kurve verursacht sein. Das bedeutet, dass sich die jeweiligen Segmente von einem ersten Abbruchszenario bis zu einem zweiten Abbruchszenario in ihrer Länge erstrecken können, sofern eine Straßenklasse der Straße von dem ersten Abbruchszenario bis zu dem zweiten Abbruchszenario unverändert ist. Unter dem Einteilen der Segmente anhand der jeweiligen Straßenklassen ist zu verstehen, dass bei einem Straßenklassenwechsel einer Straße, auf welcher das Kraftfahrzeug fährt, im Bereich des Straßenklassenwechsels die Fahrtroute unterteilt wird. Mit anderen Worten gibt der Straßenklassenwechsel beziehungsweise das Abbruchszenario einen Anfang beziehungsweise ein Ende des jeweiligen Segments vor. Durch das Einteilen der Segmente anhand der jeweiligen Straßenklassen kann sichergestellt werden, dass dem jeweiligen Segment lediglich eine einzige Straßenklasse zugeordnet ist, sodass das Vergeben der Priorität für dieses Segment eindeutig ist, sofern die Priorität anhand der Straßenklasse vergeben wird. Das Einteilen der Segmente anhand der Abbruchszenarien stellt sicher, dass innerhalb eines jeweiligen Segments die Fahrerassistenzfunktion durchgängig verwendet werden kann. In jeweiligen Bereichen der Fahrtroute, in welchen die Abbruchszenarien üblicherweise auftreten, ist ein Abbrechen der Fahrerassistenzfunktion zu erwarten. Das bedeutet, dass, sofern das Ende eines ersten Segments durch ein Abbruchszenario vorgegeben wird, die im ersten Segment aktivierte Fahrerassistenzfunktion am Ende des ersten Segments abgebrochen wird und somit in einem an das erste Segment anschließenden zweiten Segment neu zu aktivieren ist, um weiter genutzt werden zu können. Ein Abbrechen der Fahrerassistenzfunktion innerhalb jeweiliger Segmente kann somit besonders gut vermieden werden.

Es kann ein zweites Verfahren zum Unterstützen eines Fahrers beim Nutzen einer Fahrerassistenzfunktion in einem Kraftfahrzeug geben, welches nicht beansprucht ist, sondern Hintergrundwissen darstellt. Bei diesem zweiten Verfahren ist es vorgesehen, dass Schwarmdaten zu einem aktuellen Fahrtabschnitt, auf welchem sich das Kraftfahrzeug befindet, hinsichtlich eines Nutzungsgrads der Fahrerassistenzfunktion und/oder eines Abbruchverhaltens der Fahrerassistenzfunktion analysiert werden. Diese Analyse der Schwarmdaten kann insbesondere mittels einer elektronischen Recheneinrichtung des Kraftfahrzeugs erfolgen. Hierfür kann die elektronische Recheneinrichtung die Schwarmdaten von einer übergeordneten elektronischen Recheneinrichtung, beispielsweise einer Servereinrichtung, empfangen.

Diese Schwarmdaten repräsentieren jeweilige Bewegungspfade von Fahrzeugen entlang des aktuellen Fahrtabschnitts. Diese Bewegungspfade sind von den Fahrzeugen in der Vergangenheit abgefahren worden und der übergeordneten Recheneinrichtung bereitgestellt worden. Die übergeordnete Recheneinrichtung kann diese Bewegungspfade wiederum für das Kraftfahrzeug zur Verfügung stellen. Alternativ oder zusätzlich kann die übergeordnete Recheneinrichtung die Vielzahl an Bewegungspfaden der Fahrzeuge auswerten und das Ergebnis der Auswertung als Schwarmdaten beziehungsweise als Teil der Schwarmdaten für das Kraftfahrzeug beziehungsweise für die elektronische Recheneinrichtung zur Verfügung stellen. Anhand der Schwarmdaten kann der Nutzungsgrad der Fahrerassistenzfunktion durch die Fahrzeuge in der Vergangenheit in dem aktuellen Fahrtabschnitt und/oder das Abbruchverhalten der Fahrerassistenzfunktion bei deren Einsatz in den Fahrzeugen in der Vergangenheit für den aktuellen Fahrtabschnitt ermittelt werden.

Der Nutzungsgrad der Fahrerassistenzfunktion charakterisiert, wie groß der Anteil der Fahrzeuge ist, welche in der Vergangenheit den Fahrtabschnitt durchfahren haben und dabei die Fahrerassistenzfunktion genutzt haben. Das Abbruchverhalten charakterisiert, wie oft die Fahrerassistenzfunktion während deren Nutzung in dem Fahrtabschnitt in der Vergangenheit abgebrochen worden ist.

Bei dem nicht beanspruchten Verfahren ist es weiterhin vorgesehen, dass der Fahrer mittels eines Hinweissignals auf die Fahrerassistenzfunktion hingewiesen wird, wenn ermittelt wird, dass der Nutzungsgrad der Fahrerassistenzfunktion höher als ein vorgegebener erster Schwellenwert ist und/oder ein Abbruchanteil der Fahrerassistenzfunktion kleiner als ein vorgegebener zweiter Schwellenwert ist. Das bedeutet, dass der Fahrer mittels des Hinweissignals auf die Fahrerassistenzfunktion hingewiesen wird, wenn im Rahmen der Analyse der Schwarmdaten festgestellt wird, dass eine Nutzung der Fahrerassistenzfunktion als empfehlenswert eingeschätzt wird. Hierbei wird die Nutzung der Fahrerassistenzfunktion als empfehlenswert eingeschätzt, wenn der Nutzungsgrad der Fahrerassistenzfunktion in den Schwarmdaten höher als der vorgegebene erste Schwellenwert ist und/oder der Abbruchanteil und somit ein Abwurfanteil der Fahrerassistenzfunktion kleiner als der vorgegebene zweite Schwellenwert ist. Für dieses zweite Verfahren ist es somit unerheblich, ob die Fahrtroute des Kraftfahrzeugs bekannt ist. Das Ausgeben des Hinweissignals erfolgt aufgrund der Analyse der für den aktuellen Fahrtabschnitt zur Verfügung stehenden Schwarmdaten. Das Verfahren ermöglicht somit ein besonders gutes Unterstützen des Fahrers in dem aktuellen Fahrtabschnitt beim Nutzen der Fahrerassistenzfunktion, indem dem Fahrer das Hinweissignal ausgegeben wird, sofern anhand der Schwarmdaten festgestellt worden ist, dass ein Einsatz der Fahrerassistenzfunktion in dem aktuellen Fahrtabschnitt sinnvoll ist.

In einer weiteren möglichen Ausgestaltung der Erfindung ist es vorgesehen, dass das Hinweissignal ausgegeben wird, wenn wenigstens eine vorgegebene Bedingung erfüllt ist. Hierbei kann als Bedingung vorgegeben sein, dass das Segment beziehungsweise der Fahrtabschnitt wenigstens eine vorgegebene Mindestlänge aufweist. Alternativ oder zusätzlich kann als Bedingung vorgegeben sein, dass wenigstens eine Hand des Fahrers am Lenkrad anliegt. Alternativ oder zusätzlich kann als Bedingung vorgegeben sein, dass das Kraftfahrzeug wenigstens einen vorgegebenen Mindestabstand zu einer Fahrspurbegrenzung einer Fahrspur aufweist, auf welcher sich das Kraftfahrzeug befindet. Alternativ oder zusätzlich kann als Bedingung vorgegeben sein, dass kein Rad des Kraftfahrzeugs außerhalb der Fahrspur angeordnet ist, auf welcher sich das Kraftfahrzeug befindet. Weiterhin alternativ oder zusätzlich kann als Bedingung vorgegeben sein, dass die Spurmarkierungen einer Straße, auf welcher das Kraftfahrzeug fährt, wenigstens ein vorgegebenes Qualitätskriterium erfüllen. Das Einhalten dieser wenigstens einen vorgegebenen Bedingung stellt sicher, dass die Fahrerassistenzfunktion in dem aktuellen Fahrtabschnitt verlässlich genutzt werden kann. Ist diese wenigstens eine vorgegebene Bedingung nicht erfüllt, dann kann es vorkommen, dass bei einer Aktivierung der Fahrerassistenzfunktion diese Fahrerassistenzfunktion beim Fahren des Kraftfahrzeugs auf dem Fahrtabschnitt abgebrochen wird. Durch das Sicherstellen, dass die wenigstens eine vorgegebene Bedingung eingehalten wird, bevor das Hinweissignal ausgegeben wird, kann eine Frustration des Fahrers über die Fahrerassistenzfunktion besonders gering gehalten werden, indem eine Abbruchwahrscheinlichkeit für die Fahrerassistenzfunktion in dem Fahrtabschnitt besonders gering gehalten wird. Das Vorsehen der vorgegebenen Mindestlänge für das Segment beziehungsweise für den Fahrtabschnitt ermöglicht, dass der Fahrerassistenzfunktion ausreichend Zeit gegeben wird, um für das Fahrerassistenzsystem notwendige Umfeldfaktoren wie beispielsweise Spurmarkierungen sicher zu erkennen.

Beispielsweise sollten Linien erst für wenigstens eine vorgegebene Anzahl an Metern stabil erkannt worden sein, bis es als sinnvoll angesehen wird, die Fahrerassistenzfunktion zu starten. Dadurch, dass vorgegeben wird, dass wenigstens eine Hand des Fahrers am Lenkrad anzuliegen hat, wird sichergestellt, dass der Fahrer jederzeit das Steuern des Kraftfahrzeugs von der Fahrerassistenzfunktion wieder übernehmen kann. Durch das Vorgeben, dass das Kraftfahrzeug wenigstens einen vorgegebenen Mindestabstand zu der Fahrspurbegrenzung der Fahrspur aufzuweisen hat, beziehungsweise kein Rad des Kraftfahrzeugs außerhalb der Fahrspur angeordnet sein darf, wird eine ruckartige Korrektur einer Trajektorie des Kraftfahrzeugs beim Starten der Fahrerassistenzfunktion zur Mitte der Fahrspur hin vermieden. Hierdurch wird sichergestellt, dass beim Starten der Fahrerassistenzfunktion ein sanftes Steuern des Kraftfahrzeugs ohne ruckartige Korrekturen erfolgt. Durch das Sicherstellen, dass das vorgegebene Qualitätskriterium durch die Spurmarkierungen der Straße eingehalten wird, wird eine Abbruchwahrscheinlichkeit für die aktivierte Fahrerassistenzfunktion besonders gering gehalten, sobald der Fahrer infolge des Empfangens des Hinweissignals die Fahrerassistenzfunktion gestartet hat.

In einer möglichen Weiterbildung der Erfindung ist es vorgesehen, dass der Fahrer hinsichtlich seiner Erfahrung mit der Fahrerassistenzfunktion analysiert wird und das Hinweissignal automatisch ausgegeben wird, wenn festgestellt wird, dass der Fahrer keine Erfahrung mit der Fahrerassistenzfunktion hat. Der Fahrer kann beispielsweise hinsichtlich seiner Erfahrung mit der Fahrerassistenzfunktion analysiert werden, indem nach einer Identifizierung des Fahrers mittels der elektronischen Recheneinrichtung und/oder mittels der übergeordneten elektronischen Recheneinrichtung untersucht wird, ob der Fahrer bereits ein Kraftfahrzeug gefahren hat, welches die Fahrerassistenzfunktion aufweist, beziehungsweise ob die Fahrerassistenzfunktion bei der Fahrt des Fahrers in einem die Fahrerassistenzfunktion aufweisenden Kraftfahrzeug gestartet worden ist. Insbesondere bei Carsharingangeboten identifiziert sich der Fahrer vor jeder Fahrt mit einem jeweiligen Kraftfahrzeug eines Carsharinganbieters gegenüber dem Carsharinganbieter. Der Carsharinganbieter hat somit Kenntnis darüber, welche Kraftfahrzeuge der Fahrer bereits ausgeliehen und somit höchstwahrscheinlich gefahren hat. Weiterhin kann der Carsharinganbieter darüber in Kenntnis gesetzt worden sein, ob der Fahrer auf seinen jeweiligen Fahrten mit dem Kraftfahrzeug die Fahrerassistenzfunktion genutzt hat. Wird festgestellt, dass der Fahrer die Fahrerassistenzfunktion bereits bei einer Fahrt mit einem Kraftfahrzeug genutzt hat, dann kann das Ausgeben des Hinweissignals unterbunden werden. Der Fahrer kann jedoch darauf hingewiesen werden, dass er eine Unterstützung beim Nutzen der Fahrerassistenzfunktion manuell aktivieren kann, beispielsweise über eine Benutzereingabe in einem Infotainmentsystem des Kraftfahrzeugs. Das bedeutet, dass der Fahrer über das Infotainmentsystem einstellen kann, dass er trotz bereits vorhandener Erfahrung mit dem Fahrerassistenzsystem das Hinweissignal ausgegeben bekommen möchte, wenn mittels der elektronischen Recheneinrichtung festgestellt worden ist, dass der Einsatz der Fahrerassistenzfunktion empfohlen ist. Es wird somit ermöglicht, dass mit der Fahrerassistenzfunktion bereits sehr vertraute Fahrer nicht durch das Ausgeben des Hinweissignals genervt werden und mit der Fahrerassistenzfunktion nicht erfahrene Fahrer durch das automatische Ausgeben des Hinweissignals besonders gut beim Nutzen der Fahrerassistenzfunktion unterstützt werden können. Weiterhin wird ermöglicht, dass ein Fahrer, welcher bereits Erfahrungen mit der Fahrerassistenzfunktion gesammelt hat, auf Wunsch und somit durch das Eingeben der Benutzereingabe durch Ausgeben des Hinweissignals beim Nutzen der Fahrerassistenzfunktion unterstützt werden kann.

In einer weiteren möglichen Ausgestaltung der Erfindung ist es vorgesehen, dass als Hinweissignal eine optische Hervorhebung des Bedienelements erfolgt, bei dessen Betätigung ein Starten der Fahrerassistenzfunktion ausgelöst wird. Bei dem Bedienelement kann es sich beispielsweise um einen Knopf im Innenraum des Kraftfahrzeugs, insbesondere im Bereich einer Instrumententafel des Kraftfahrzeugs, handeln. Das Bedienelement kann beispielsweise mittels einer Lichtquelle beleuchtet und somit hervorgehoben werden. Durch das optische Hervorheben des Bedienelements als Hinweissignal kann ein Blick des Fahrers besonders einfach und schnell auf das Bedienelement gelenkt werden. Infolgedessen kann der Fahrer durch das Betätigen des Bedienelements die Fahrerassistenzfunktion starten. Es wird somit für den Fahrer ein besonders intuitives Starten der Fahrerassistenzfunktion ermöglicht.

In einer weiteren möglichen Ausgestaltung der Erfindung ist es vorgesehen, dass mittels der Fahrerassistenzfunktion dem Fahrer bei einem Spurwechsel und/oder bei einer Längsführung des Kraftfahrzeugs und/oder bei einem Halten der Fahrspur und/oder bei einem Halten eines Abstands zu einem vorausfahrenden Fahrzeug assistiert wird. Das bedeutet, dass die Fahrerassistenzfunktion dazu eingerichtet ist, dem Fahrer des Kraftfahrzeugs beim Querführen und/oder beim Längsführen des Kraftfahrzeugs zu assistieren und somit diesen zu unterstützen. Hierdurch kann der Fahrer durch die Fahrerassistenzfunktion beim Steuern des Kraftfahrzeugs besonders gut unterstützt werden.

Die Erfindung betrifft des Weiteren ein Kraftfahrzeug, welches dazu eingerichtet ist, ein Verfahren, wie es bereits im Zusammenhang mit dem erfindungsgemäßen ersten Verfahren beschrieben worden ist, und/oder ein Verfahren, wie es bereits im Zusammenhang mit dem erfindungsgemäßen zweiten Verfahren beschrieben worden ist, durchzuführen. Vorteile und vorteilhafte Weiterbildungen der erfindungsgemäßen Verfahren sind als Vorteile und vorteilhafte Weiterbildungen des erfindungsgemäßen Kraftfahrzeugs anzusehen und umgekehrt.

Weitere Merkmale der Erfindung können sich aus der nachfolgenden Figurenbeschreibung sowie anhand der Zeichnung ergeben.

Die Zeichnung zeigt in:
- Fig. 1: ein Verfahrensschema für ein erstes Verfahren zum Unterstützen eines Fahrers beim Nutzen einer Fahrerassistenzfunktion in einem Kraftfahrzeug;
- Fig. 2: ein Verfahrensschema für ein zweites Verfahren zum Unterstützen eines Fahrers beim Nutzen einer Fahrerassistenzfunktion in einem Kraftfahrzeug; und
- Fig. 3: eine ermittelte Fahrtroute des Kraftfahrzeugs, welche in mehrere Segmente unterteilt ist, wobei jedem Segment eine Priorität zugeordnet ist und die jeweiligen Segmente in Abhängigkeit von der ihnen zugewiesenen Priorität sowie deren Zeitpunkt des Auftretens entlang der Fahrtroute sortiert werden, wobei ein Hinweissignal im Kraftfahrzeug ausgegeben wird, welches auf eine Fahrerassistenzfunktion hinweist, wenn das Kraftfahrzeug in dem ersten Segment der neu sortierten Reihenfolge der Segmente fährt.

Gleiche oder funktionsgleiche Elemente sind in den Figuren mit den gleichen Bezugszeichen versehen.

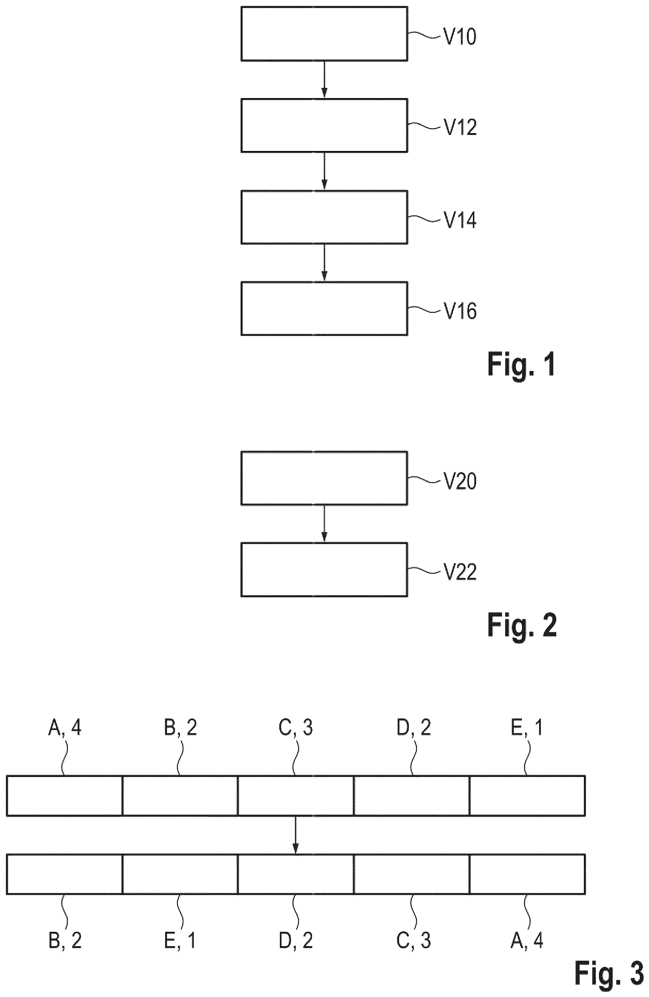

In den Fig. 1 und 2 sind jeweils Verfahrensschemata für unterschiedliche Verfahren zum Unterstützen eines Fahrers beim Nutzen einer Fahrerassistenzfunktion in einem Kraftfahrzeug gezeigt. Bei den jeweiligen Verfahren kann der Fahrer mittels eines Hinweissignals, insbesondere einer optischen Hervorhebung eines Bedienelements, darauf hingewiesen werden, dass die Fahrerassistenzfunktion in dem Kraftfahrzeug zur Verfügung steht und ein Einsatz dieser Fahrerassistenzfunktion in dem Moment, in welchem das Bedienelement optisch hervorgehoben ist, besonders vorteilhaft und somit empfohlen ist. Durch Betätigen des Bedienelements, wie einem Drücken des Bedienelements, kann der Fahrer die Fahrerassistenzfunktion starten. Die Fahrerassistenzfunktion ist insbesondere dazu eingerichtet, dem Fahrer bei einem Spurwechsel und/oder bei einer Längsführung des Kraftfahrzeugs und/oder bei einem Halten der Fahrspur und/oder bei einem Halten eines Abstands zu einem vorausfahrenden Fahrzeug zu assistier. Insbesondere kann es sich bei der Fahrerassistenzfunktion um einen sogenannten Travel Assist handeln.

In Fig. 1 ist ein Verfahrensschema für ein erstes Verfahren zum Unterstützen des Fahrers beim Nutzen der Fahrerassistenzfunktion in dem Kraftfahrzeug gezeigt. Bei dem ersten Verfahren ist es vorgesehen, dass in einem ersten Verfahrensschritt V10 eine ermittelte Fahrtroute des Kraftfahrzeugs in mehrere Segmente A bis E unterteilt wird. Die Fahrtroute kann insbesondere von einer Navigationseinrichtung des Kraftfahrzeugs ermittelt werden, wenn eine Routenführung des Kraftfahrzeugs aktiviert ist. Eine in mehrere Segmente A bis E unterteilte Fahrtroute ist in Fig. 3 schematisch gezeigt. Die Bezeichnungen A bis E dienen einer Unterscheidung der jeweiligen Segmente. In einem zweiten Verfahrensschritt V12 des ersten Verfahrens ist es vorgesehen, dass jedem Segment A bis E eine Priorität zugeteilt wird, welche charakterisiert, wie vorteilhaft ein Einsatz der Fahrerassistenzfunktion in dem jeweiligen Segment ist. In Fig. 3 sind die jeweiligen Prioritäten den Segmenten zugeordnet dargestellt. Vorliegend ist dem Segment A die Priorität 4 zugeordnet, dem Segment B die Priorität 2 zugeordnet, dem Segment C die Priorität 3 zugeordnet, dem Segment D die Priorität 2 zugeordnet und dem Segment E die Priorität 1 zugeordnet. Die jeweilige Priorität ist vorliegend in Abhängigkeit von der Straßenklasse, welche dem jeweiligen Segment zugeordnet ist, gewählt. Hierbei beschreibt die Straßenklasse, um welche Art von Straße es sich bei der Straße handelt, welche in dem jeweiligen Segment Teil der Fahrtroute ist. Als Straßenklasse kann die Straße vorliegend eine Autobahn oder eine Landstraße mit wenigen oder weiten Kurven oder eine Landstraße mit vielen und/oder engen Kurven oder eine Stadtstraße sein. Vorliegend ist den Segmenten mit der Straßenklasse Autobahn die Priorität 1 zugeordnet, den Segmenten mit der Straßenklasse Landstraße mit wenigen und/oder weiten Kurven die Priorität 2 zugeordnet, Landstraßen mit vielen und/oder engen Kurven die Priorität 3 zugeordnet und Stadtstraßen die Priorität 4 zugeordnet. Bei der höchsten Priorität handelt es sich um die Priorität 1, wobei die Priorität mit aufsteigendem Zahlenwert niedriger wird.

Für das Einteilen der Fahrtroute in die Segmente kann eine einzuhaltende Länge für die jeweiligen Segmente vorgegeben sein. Hierfür kann für die jeweiligen Segmente eine Streckenlänge vorgegeben sein oder eine geschätzte Fahrtdauer des Kraftfahrzeugs für das Durchfahren des jeweiligen Segments vorgegeben sein. Das bedeutet, dass vorgegeben wird, wie lange das Kraftfahrzeug für das Durchfahren des jeweiligen Segments benötigen darf, und das Segment in seiner Länge derart angepasst wird, dass das Kraftfahrzeug geschätzt die vorgegebene Dauer für das Durchfahren des Segments benötigt. Die Segmente können insbesondere derart eingeteilt werden, dass diese bei einem Straßenklassenwechsel beziehungsweise beim Auftreten eines Abbruchszenarios starten beziehungsweise enden. Das Einteilen der jeweiligen Segmente anhand der Straßenklassen stellt sicher, dass die durch ein jeweiliges Segment führende Fahrtroute in diesem Segment lediglich eine einzige Straßenklasse umfasst. Hierdurch kann die jeweilige Priorität den Segmenten jeweils eindeutig zugeordnet werden.

Bei einem Abbruchsszenario handelt es sich um eine Situation, in welcher das aktivierte Fahrerassistenzsystem aufgrund von Umgebungsbedingungen automatisch beendet wird. Ein derartiges Abbruchsszenario kann beispielsweise aufgrund eines Erreichens einer Kreuzung oder einer Ampel oder eines Kreisverkehrs oder einer für das Fahrerassistenzsystem zu engen Kurve durch das Kraftfahrzeug erfolgen. Durch das Einteilen der Segmente derart, dass diese Abbruchszenarien an Übergängen zwischen zwei Segmenten angeordnet sind, wird ermöglicht, dass beim Fahren des Kraftfahrzeugs auf der Fahrtroute innerhalb eines Segments eine Abbruchswahrscheinlichkeit für die aktivierte Fahrerassistenzfunktion besonders gering gehalten wird.

In einem dritten Verfahrensschritt V14 des ersten Verfahrens ist es vorgesehen, dass eine Reihenfolge der Segmente in Abhängigkeit von ihrer Priorität und in Abhängigkeit von ihrem Auftreten entlang der Fahrtroute erstellt wird. Dieses Sortieren der Segmente anhand des Zeitpunkts ihres Auftretens entlang der Fahrtroute sowie ihrer zugewiesenen Priorität ist in Fig. 3 gezeigt. Die Segmente werden mittels eines Optimierungsverfahrens gereiht, wobei die jeweiligen Segmente weiter vorne in der Reihenfolge angeordnet werden, je höher ihre Priorität ist beziehungsweise je früher sie entlang der Fahrtroute auftreten. Wie in Fig. 3 erkannt werden kann, weist das Segment B die beste Kombination aus der Höhe der Priorität und Zeitpunkt des Auftretens entlang der Fahrtroute auf, sodass das Segment B in der Reihenfolge ganz vorne eingeordnet wird. Das Segment A weist in Bezug auf Höhe der Priorität sowie Auftreten entlang der Fahrtroute die schlechteste Kombination entsprechend des Optimierungsverfahrens auf und ist somit in der Reihenfolge ganz hinten angeordnet. Je nach Optimierungsverfahren können für das Sortieren der Segmente die den jeweiligen Segmenten zugeordnete Priorität oder das jeweilige zeitliche Auftreten der Segmente entlang der Fahrtroute stärker gewichtet sein.

In einem vierten Verfahrensschritt V16 des ersten Verfahrens ist es vorgesehen, dass der Fahrer mittels des Hinweissignals auf die Fahrerassistenzfunktion hingewiesen wird, wenn das Kraftfahrzeug in dem ersten Segment der Reihenfolge fährt. Das bedeutet, dass vorliegend dem Fahrer das Hinweissignal in dem Kraftfahrzeug ausgegeben wird, sobald das Kraftfahrzeug in das Segment B einfährt beziehungsweise während das Kraftfahrzeug in dem Segment B fährt. Hierdurch wird ermöglicht, dass dem Fahrer des Kraftfahrzeugs das Hinweissignal besonders früh entlang der Fahrtroute in einem Segment mit einer besonders hohen Priorität ausgegeben wird und somit in einem Segment, in welchem der Einsatz der Fahrerassistenzfunktion besonders empfehlenswert ist. Aktiviert der Fahrer somit beim Fahren in dem ersten Segment der Reihenfolge die Fahrerassistenzfunktion, dann lernt der Fahrer die Fahrerassistenzfunktion besonders früh bei seinem Fahren entlang der Fahrtroute kennen, in einem Segment, in welchem die Fahrerassistenzfunktion besonders gut funktioniert. Hierdurch kann der Fahrer besonders positive Erfahrungen mit der Fahrerassistenzfunktion sammeln, wodurch eine Wahrscheinlichkeit steigt, dass der Fahrer in der Zukunft die Fahrerassistenzfunktion wieder beziehungsweise öfter nutzen wird.

Mit anderen Worten kann das erste Verfahren bei aktiver Routenführung des Kraftfahrzeugs durchgeführt werden. Bei dem Verfahren erfolgt eine Suchroutine zur Sortierung der Segmente der gesamten Fahrtroute mit vorab definierten Prioritäten. Die Fahrtroute wird in Segmente unterteilt, beispielsweise in Fünf-Minuten-Abschnitte oder Drei-Kilometer-Abschnitte, und anschließend werden mit dem Optimierungsverfahren diese Segmente in die Reihenfolge anhand der Priorität gebracht. Im Folgenden wird ein Beispiel hierzu beschrieben. Liegt ein Priorität-1-Segment innerhalb der ersten fünf Segmente entlang der Fahrtroute, dann wird dieses Priorität-1-Segment als das Segment ausgewählt, in welchem dem Fahrer das Hinweissignal erstmalig ausgegeben wird. Das Hinweissignal charakterisiert eine Handlungsempfehlung zum Aktivieren der Fahrerassistenzfunktion. Tritt dieses Priorität-1-Segment jedoch erst nach einer Stunde Fahrt auf, dann kann ein Segment der Priorität 2 als erstes Segment der Reihenfolge einsortiert werden.

Die Segmente können alternativ mit zueinander unterschiedlichen Längen und/oder Fahrtdauern für das Durchfahren des jeweiligen Segments eingeteilt werden. Hierbei kann ein Segment beispielsweise eine gesamte Länge der Fahrtroute von einem Start des Segments zu einer Kreuzung oder bis zu einem Abbiegen des Kraftfahrzeugs umfassen. Hierbei ist es insbesondere vorgesehen, dass die jeweiligen Segmente eine Mindestfahrtdauer und/oder eine Mindeststreckenlänge erfüllen, damit das jeweilige Segment analysiert beziehungsweise dem Segment eine Priorität zugeteilt wird. Erfüllt das Segment weder die vorgegebene Mindestfahrtdauer noch die vorgegebene Mindeststreckenlänge, dann unterbleibt ein Ausgeben des Hinweissignals in diesem Segment.

Bei dem zweiten Verfahren zum Unterstützen des Fahrers beim Nutzen der Fahrerassistenzfunktion in dem Kraftfahrzeug, welche in dem Verfahrensschema in Fig. 2 gezeigt ist, ist vorgesehen, dass das Hinweissignal in Abhängigkeit von Schwarmdaten für einen Fahrtabschnitt, auf welchem sich das Kraftfahrzeug befindet, ausgegeben wird. Hierfür ist es bei dem zweiten Verfahren vorgesehen, dass in einem ersten Verfahrensschritt V20 die Schwarmdaten zu dem aktuellen Fahrtabschnitt hinsichtlich eines Nutzungsgrads der Fahrerassistenzfunktion und/oder eines Abbruchverhaltens der Fahrerassistenzfunktion analysiert werden. Hierfür kann das Kraftfahrzeug die Schwarmdaten von einer Servereinrichtung empfangen und die empfangenen Schwarmdaten analysieren. Die Schwarmdaten repräsentieren von weiteren Fahrzeugen beim Durchfahren des Fahrtabschnitts in der Vergangenheit aufgezeichnete Daten. Der Nutzungsgrad der Fahrerassistenzfunktion beschreibt, wie viele der Fahrzeuge, welche in der Vergangenheit den Fahrtabschnitt durchfahren haben, beim Durchfahren des Fahrtabschnitts die Fahrerassistenzfunktion genutzt haben. Das Abbruchverhalten wiederum beschreibt, bei welchem Anteil an Fahrzeugen beziehungsweise bei wie vielen der Fahrzeuge, welche beim Durchfahren des Fahrtabschnitts die Fahrerassistenzfunktion genutzt hatten, die Fahrerassistenzfunktion abgebrochen worden ist. Wird beim Analysieren der Schwarmdaten festgestellt, dass der Nutzungsgrad der Fahrerassistenzfunktion höher als ein vorgegebener erster Schwellenwert ist und/oder ein Abbruchanteil der Fahrerassistenzfunktion kleiner als ein vorgegebener zweiter Schwellenwert ist, dann wird in dem zweiten Verfahrensschritt V22 der Fahrer mittels des Hinweissignals auf die Fahrerassistenzfunktion hingewiesen. Mit anderen Worten werden das Hinweissignal und somit die Handlungsempfehlung ausgegeben, sobald das Kraftfahrzeug auf einer Straße fährt, welche gute Spurmarkierungen besitzt, und die Schwarmdaten zeigen, dass in diesem aktuellen Fahrtabschnitt ein gutes Szenario für den Einsatz der Fahrerassistenzfunktion vorliegt.

Dieses gute Szenario liegt bei einem hohen Nutzungsgrad der Fahrerassistenzfunktion mit wenigen Abwürfen der Fahrerassistenzfunktion sowie bei einer passenden Trajektorie des Fahrtabschnitts für die Fahrerassistenzfunktion mit geringen Krümmungen vor. Der Fahrer wird insbesondere mittels des zweiten Verfahrens beim Nutzen der Fahrerassistenzfunktion in dem Kraftfahrzeug unterstützt, wenn eine Routenführung in dem Kraftfahrzeug nicht aktiv ist. Folglich wird der Fahrer mittels des zweiten Verfahrens beim Einsetzen der Fahrerassistenzfunktion unterstützt, wenn keine Navigationsdaten vorhanden sind, Schwarmdaten jedoch vorliegen.

Ist eine Routenführung des Kraftfahrzeugs nicht aktiv und liegen keine Schwarmdaten für einen aktuellen Fahrtabschnitt vor, dann kann, sofern die Straßenklasse der Straße bekannt ist, auf welcher das Kraftfahrzeug zum jeweiligen Zeitpunkt fährt, das Hinweissignal ausgegeben werden, sofern das Kraftfahrzeug auf einer definierten Straßenklasse fährt. Somit kann das Hinweissignal insbesondere dann ausgegeben werden, wenn das Kraftfahrzeug auf einer Autobahn oder auf einer Landstraße fährt, wohingegen das Hinweissignal nicht ausgegeben wird, wenn das Kraftfahrzeug auf einer Stadtstraße fährt. Die Information darüber, auf welcher Straßenklasse sich das Kraftfahrzeug zum jeweiligen Zeitpunkt befindet, kann der Navigationseinrichtung des Kraftfahrzeugs entnommen werden.

Das bedeutet, dass die Navigationseinrichtung die Information darüber, wo das Kraftfahrzeug gerade fährt, bereitstellen kann und in Abhängigkeit von der Information das Hinweissignal ausgegeben oder nicht ausgegeben wird.

Insbesondere kann das Hinweissignal bei den Verfahren lediglich dann ausgegeben werden, wenn sämtliche vorgegebenen Bedingungen erfüllt sind. Als Bedingung kann vorgegeben sein, dass das Segment beziehungsweise der Fahrtabschnitt wenigstens eine vorgegebene Mindestlänge aufzuweisen hat. Alternativ oder zusätzlich kann als Bedingung vorgegeben sein, dass wenigstens eine Hand des Fahrers am Lenkrad anzuliegen hat. Weiterhin alternativ oder zusätzlich kann als Bedingung vorgegeben sein, dass das Kraftfahrzeug wenigstens einen vorgegebenen Mindestabstand zu einer Fahrspurbegrenzung einer Fahrspur einzuhalten hat, auf welcher sich das Kraftfahrzeug befindet. Weiterhin alternativ oder zusätzlich kann als Bedingung vorgegeben sein, dass kein Rad des Kraftfahrzeugs außerhalb der Fahrspur angeordnet sein darf, auf welcher sich das Kraftfahrzeug befindet. Weiterhin alternativ oder zusätzlich kann als Bedingung vorgegeben sein, dass erkannte Spurmarkierungen einer Straße, auf welcher das Kraftfahrzeug fährt, wenigstens ein vorgegebenes Qualitätskriterium zu erfüllen haben. Das bedeutet, dass generell wenigstens eine vorgegebene Umgebungsbedingung erfüllt zu sein hat, damit überhaupt die Handlungsempfehlung in Form des Ausgebens des Hinweissignals ausgegeben wird. Das bedeutet, dass bei Starkregen oder bei Schnee oder bei einer Verschmutzung einer Kameraeinrichtung, welche dazu eingerichtet ist, Spurmarkierungen der Straße, auf welcher sich das Kraftfahrzeug befindet, zu erkennen, das Ausgeben des Hinweissignals unterbunden wird. Hierbei können die jeweiligen vorgegebenen Bedingungen von dem Straßentyp bzw. von der Priorität des jeweiligen Segments beziehungsweise des Fahrtabschnitts abhängen. Somit kann bei perfekten Bedingungen für die Fahrerassistenzfunktion das Hinweissignal auf der Autobahn oder auf der Landstraße ausgegeben werden, wohingegen bei nicht perfekten Bedingungen für die Fahrerassistenzfunktion vorgegeben sein kann, dass das Hinweissignal lediglich bei einem Fahren des Kraftfahrzeugs auf der Autobahn ausgegeben wird. Das bedeutet, dass das Ausgeben des Hinweissignals in Abhängigkeit von der Priorität sowie in Abhängigkeit von den Umgebungsbedingungen folgen kann. Somit kann ein Wetter einen Schwellenwert für die Priorität beeinflussen, welcher beschreibt, bei welchen Prioritäten das Hinweissignal ausgegeben wird und bei welchen Prioritäten das Ausgeben des Hinweissignals unterbunden wird.

Ein Ablauf zum Einsetzen der Fahrerassistenzfunktion kann beispielsweise folgendermaßen ablaufen: Das Kraftfahrzeug wird mittels eines Schlüssels oder eines mobilen elektronischen Endgeräts, wie einem Smartphone, geöffnet. Infolgedessen kann von dem Kraftfahrzeug an eine Servereinrichtung und somit an ein Backend angefragt werden, ob der Fahrer bereits Fahrzeuge mit der Fahrerassistenzfunktion in der Vergangenheit gemietet hat und die Fahrerassistenzfunktion bei vergangenen Fahrten verwendet hat. Hierbei kann der Fahrer über eine Bluetooth-ID oder auf sonstige Arten authentifiziert werden. Anhand eines von dem Backend auf die Anfrage empfangenen Antwortsignals kann mittels des Kraftfahrzeugs ermittelt werden, ob bei dem Fahrer Erfahrung mit der Fahrerassistenzfunktion vorhanden ist. Wird festgestellt, dass bei dem Fahrer bereits Erfahrung mit der Fahrerassistenzfunktion vorhanden ist, dann kann vor Fahrtbeginn der Fahrer über ein Popup im Infotainmentsystem darüber informiert werden, dass Handlungsempfehlungen für die Verwendung der Fahrerassistenzfunktion deaktiviert sind. Falls der Fahrer diese Handlungsempfehlungen wünscht, kann er diese im Infotainmentsystem einstellen. Infolgedessen werden dem Fahrer keine Handlungsempfehlungen für den Einsatz der Fahrerassistenzfunktion ausgegeben, sofern der Fahrer dies nicht explizit wünscht. Wird festgestellt, dass der Fahrer bereits Erfahrung mit der Fahrerassistenzfunktion hat, dann kann der Fahrer über eine Ausgabe darüber informiert werden, dass die Fahrerassistenzfunktion in dem Kraftfahrzeug zur Verfügung steht beziehungsweise welche Funktionen die zur Verfügung stehende Fahrerassistenzfunktion aufweist.

Wird festgestellt, dass der Fahrer keine Erfahrung mit der Fahrerassistenzfunktion hat, dann wird dem Fahrer vor Fahrtbeginn über ein Popup im Infotainmentsystem mitgeteilt, dass das Kraftfahrzeug in bestimmten Situationen die Anwendung der Fahrerassistenzfunktion durch das Ausgeben des Hinweissignals empfiehlt, beispielsweise indem die der Fahrerassistenzfunktion zugeordnete Taste am Lenkrad hervorgehoben wird. Hierbei kann die Taste durch Blinken und/oder Farbänderung und/oder Vibration hervorgehoben werden. Das bedeutet, dass, sofern festgestellt wird, dass der Fahrer keine Erfahrung mit der Fahrerassistenzfunktion hat, das Hinweissignal automatisch ausgegeben wird, wenn festgestellt wird, dass der Einsatz der Fahrerassistenzfunktion empfehlenswert ist.

Das Hinweissignal wird somit lediglich dann ausgegeben, wenn festgestellt wird, dass der Fahrer keine Erfahrung mit der Fahrerassistenzfunktion hat, oder wenn das Ausgeben des Hinweissignals vom Fahrer explizit aktiviert worden ist, sofern der Fahrer bereits Erfahrung mit der Fahrerassistenzfunktion hat.

Sobald in einem Klemmenzyklus die Fahrerassistenzfunktion aktiviert worden ist und die Fahrerassistenzfunktion für länger als einen vorgegebenen Wert, wie 30 Sekunden oder 500 Meter, aktiv war, wird für diese Fahrt des Kraftfahrzeugs keine weitere Handlungsempfehlung in Form des Ausgebens des Hinweissignals ausgegeben. Wird während eines Klemmenzyklus festgestellt, dass ein Fahrerwechsel stattgefunden hat, kann das Hinweissignal für den neuen Fahrer des Kraftfahrzeugs erneut ausgegeben werden. Der Fahrerwechsel kann insbesondere mittels einer Fahrerbeobachtungskamera und/oder anhand einer Sitzverstellung und/oder anhand einer Sitzbelegung ermittelt werden.

Bei den Verfahren ist es somit vorgesehen, dass eine Handlungsempfehlung in Form des Hinweissignals ausgegeben wird, wenn festgestellt wird, dass eine gute Situation für den Einsatz der Fahrerassistenzfunktion besteht. Die gute Situation für den Einsatz der Fahrerassistenzfunktion wird festgestellt, wenn zum einen der Einsatz der Fahrerassistenzfunktion grundsätzlich möglich ist. Weiterhin ist die Einschätzung dafür, ob es sich bei einer Situation um eine gute Situation für den Einsatz der Fahrerassistenzfunktion handelt, von einer Straßenklasse einer Straße abhängig, auf welcher das Kraftfahrzeug fährt. Wird somit festgestellt, dass es sich um eine gute Situation für den Einsatz der Fahrerassistenzfunktion handelt, dann wird der Fahrer durch das Ausgeben des Hinweissignals auf die Fahrerassistenzfunktion hingewiesen.

Insgesamt zeigt die Erfindung Verfahren zur Optimierung der Anwendung von Fahrerassistenzsystemen, insbesondere beim Einsatz einer querführenden Fahrfunktion.

### Bezugszeichenliste

- V10 bis V22: jeweilige Verfahrensschritte
- A bis E: Segmente
- 1 bis 4: jeweilige Prioritäten

## Patentansprüche

1. Verfahren zum Unterstützen eines Fahrers beim Nutzen einer Fahrerassistenzfunktion in einem Kraftfahrzeug, bei welchem
- eine ermittelte Fahrtroute des Kraftfahrzeugs in mehrere Segmente (A-E) unterteilt wird (V10),
- jedem Segment (A-E) eine Priorität (1-4) zugeteilt wird, welche charakterisiert, wie vorteilhaft ein Einsatz der Fahrerassistenzfunktion in dem jeweiligen Segment (A-E) ist (V12),
**dadurch gekennzeichnet, dass**
- eine Reihenfolge der Segmente (A-E) in Abhängigkeit von ihrer Priorität (1-4) und in Abhängigkeit von ihrem Auftreten entlang der Fahrtroute erstellt wird (V14), und
- der Fahrer mittels eines Hinweissignals auf die Fahrerassistenzfunktion hingewiesen wird, wenn das Kraftfahrzeug in dem ersten Segment der Reihenfolge fährt (V16).

2. Verfahren nach Anspruch 1, wobei dem jeweiligen Segment (A-E) die Priorität (1-4) in Abhängigkeit von einer jeweiligen Straßenklasse des jeweiligen Segments zugeordnet wird.

3. Verfahren nach Anspruch 1 oder 2, wobei die Segmente (A-E) der Fahrtroute hinsichtlich einer vorgegebenen Streckenlänge oder hinsichtlich einer vorgegebenen geschätzten Fahrtdauer des Kraftfahrzeugs in dem jeweiligen Segment (A-E) eingeteilt werden.

4. Verfahren nach einem der vorhergehenden Ansprüche, wobei die Segmente (A-E) der Fahrtroute anhand jeweiliger Abbruchszenarien für die Fahrerassistenzfunktion und/oder anhand jeweiliger Straßenklassen von bei der Fahrtroute genutzten Straßen eingeteilt werden.

5. Verfahren nach einem der vorhergehenden Ansprüche, wobei das Hinweissignal ausgegeben wird, wenn wenigstens eine vorgegebene Bedingung der folgenden Bedingungen erfüllt ist:
- das Segment (A-E) bzw. der Fahrtabschnitt wenigstens eine vorgegebene Mindestlänge aufweist,
- wenigstens eine Hand des Fahrers am Lenkrad anliegt,
- das Kraftfahrzeug wenigstens einen vorgegebenen Mindestabstand zu einer Fahrspurbegrenzung einer Fahrspur aufweist, auf welcher sich das Kraftfahrzeug befindet,
- kein Rad des Kraftfahrzeugs außerhalb der Fahrspur angeordnet ist, auf welcher sich das Kraftfahrzeug befindet,
- Spurmarkierungen einer Straße, auf welcher das Kraftfahrzeug fährt, wenigstens ein vorgegebenes Qualitätskriterium erfüllen.

6. Verfahren nach einem der vorhergehenden Ansprüche, wobei der Fahrer hinsichtlich seiner Erfahrung mit der Fahrerassistenzfunktion analysiert wird, und das Hinweissignal automatisch ausgegeben wird, wenn festgestellt wird, dass der Fahrer keine Erfahrung mit der Fahrerassistenzfunktion hat.

7. Verfahren nach einem der vorhergehenden Ansprüche, wobei als Hinweissignal eine optische Hervorhebung eines Bedienelements erfolgt, bei dessen Betätigung ein Starten der Fahrerassistenzfunktion ausgelöst wird.

8. Verfahren nach einem der vorhergehenden Ansprüche, wobei als Fahrerassistenzfunktion dem Fahrer bei einem Spurwechsel und/oder bei einer Längsführung des Kraftfahrzeugs und/oder bei einem Halten der Fahrspur und/oder bei einem Halten eines Abstands zu einem vorausfahrenden Fahrzeug assistiert wird.

9. Kraftfahrzeug, welches dazu eingerichtet ist, ein Verfahren nach einem der vorhergehenden Ansprüche durchzuführen

## Claims

1. Method for supporting a driver in using a driver assistance function in a motor vehicle, wherein
- a determined route of the motor vehicle is divided into a plurality of segments (A-E) (V10),
- each segment (A-E) is assigned a priority (1-4) which characterizes how advantageous the use of the driver assistance function is in the relevant segment (A-E) (V12),
**characterized in that**
- a sequence of the segments (A-E) is created on the basis of their priority (1-4) and on the basis of their occurrence along the route (V14), and
- the driver assistance function is suggested to the driver by means of a suggestion signal when the motor vehicle is traveling in the first segment of the sequence (V16).

2. Method according to claim 1, wherein the priority (1-4) is assigned to the relevant segment (A-E) on the basis of a relevant road class of the relevant segment.

3. Method according to claim 1 or claim 2, wherein the segments (A-E) of the route are classified with regard to a predetermined distance or with regard to a predetermined estimated traveling time of the motor vehicle in the relevant segment (A-E).

4. Method according to any of the preceding claims, wherein the segments (A-E) of the route are classified according to respective termination scenarios for the driver assistance function and/or according to respective road classes of roads used on the route.

5. Method according to any of the preceding claims, wherein the suggestion signal is output when at least one predetermined condition of the following conditions is met:
- the segment (A-E) or the journey section has at least a predetermined minimum length,
- at least one hand of the driver is on the steering wheel,
- the motor vehicle is at least a predetermined minimum distance from a lane boundary of a lane in which the motor vehicle is located,
- no wheel of the motor vehicle is outside the lane in which the motor vehicle is located,
- lane markings of a road on which the motor vehicle is traveling meet at least one predetermined quality criterion.

6. Method according to any of the preceding claims, wherein the driver is analyzed with regard to their experience with the driver assistance function, and the suggestion signal is automatically output if it is determined that the driver has no experience with the driver assistance function.

7. Method according to any of the preceding claims, wherein, as a suggestion signal, a control element is optically emphasized, the actuation of which control element triggers the start of the driver assistance function.

8. Method according to any of the preceding claims, wherein the driver assistance function assists the driver in changing lanes and/or in longitudinal guidance of the motor vehicle and/or in staying in lane and/or in maintaining a distance to a vehicle traveling in front.

9. Motor vehicle which is designed to carry out a method according to any of the preceding claims.

## Revendications

1. Procédé permettant d'assister un conducteur lors de l'utilisation d'une fonction d'aide à la conduite dans un véhicule automobile, dans lequel
- un itinéraire déterminé du véhicule automobile est divisé en plusieurs segments (A-E) (V10),
- une priorité (1-4) est attribuée à chaque segment (A-E), laquelle caractérise à quel point une utilisation de la fonction d'aide à la conduite dans le segment (A-E) respectif est avantageuse (V12),
**caractérisé en ce que**
- une séquence des segments (A-E) est établie en fonction de leur priorité (1-4) et en fonction de leur occurrence le long de l'itinéraire (V14), et
- le conducteur est averti de la fonction d'aide à la conduite au moyen d'un signal d'avertissement lorsque le véhicule automobile se déplace dans le premier segment de la séquence (V16).

2. Procédé selon la revendication 1, dans lequel la priorité (1-4) est attribuée au segment (A-E) respectif en fonction d'une classe de route respective du segment respectif.

3. Procédé selon la revendication 1 ou 2, dans lequel les segments (A-E) de l'itinéraire sont divisés en fonction d'une longueur de trajet prédéfinie ou en fonction d'une durée de trajet estimée prédéfinie du véhicule automobile dans le segment (A-E) respectif.

4. Procédé selon l'une des revendications précédentes, dans lequel les segments (A-E) de l'itinéraire sont divisés à l'aide de scénarios d'interruption respectifs pour la fonction d'aide à la conduite et/ou à l'aide de classes de routes respectives de routes utilisées dans l'itinéraire.

5. Procédé selon l'une des revendications précédentes, dans lequel le signal d'avertissement est émis lorsqu'au moins une condition prédéfinie parmi les conditions suivantes est satisfaite :
- le segment (A-E) ou la section de trajet présente au moins une longueur minimale prédéfinie,
- au moins une main du conducteur repose sur le volant,
- le véhicule automobile présente au moins une distance minimale prédéfinie par rapport à une limite de voie de circulation d'une voie de circulation sur laquelle se trouve le véhicule automobile,
- aucune roue du véhicule automobile n'est disposée en dehors de la voie de circulation sur laquelle se trouve le véhicule automobile,
- des marquages de voie d'une route sur laquelle le véhicule automobile circule satisfont à au moins un critère de qualité prédéfini.

6. Procédé selon l'une des revendications précédentes, dans lequel le conducteur est analysé quant à son expérience avec l'utilisation de la fonction d'aide à la conduite, et le signal d'avertissement est émis automatiquement lorsqu'il est déterminé que le conducteur n'a pas d'expérience avec l'utilisation de la fonction d'aide à la conduite.

7. Procédé selon l'une des revendications précédentes, dans lequel une accentuation optique d'un élément de commande, dont l'actionnement déclenche un démarrage de la fonction d'aide à la conduite, est effectuée en tant que signal d'avertissement.

8. Procédé selon l'une des revendications précédentes, dans lequel, en tant que fonction d'aide à la conduite, le conducteur est aidé lors d'un changement de voie et/ou lors d'un guidage longitudinal du véhicule automobile et/ou lors d'un maintien de la voie de circulation et/ou lors d'un maintien d'une distance par rapport à un véhicule qui précède.

9. Véhicule automobile, lequel est configuré pour exécuter un procédé selon l'une des revendications précédentes.
